# EUROPÄISCHE PATENTSCHRIFT

(11) **EP 1 375 932 B1**
(45) Veröffentlichungstag und Bekanntmachung des Hinweises auf die Patenterteilung: **08.11.2006**
(21) Anmeldenummer: 03405438.7
(22) Anmeldetag: 18.06.2003
(51) Int. Cl.: F16B 19/14, F16B 43/00, E04F 13/08

(54) **Befestigungselement**
Attachment member
Elément de fixation

(30) Priorität: 28.06.2002 DE 10229141
(43) Veröffentlichungstag der Anmeldung: 02.01.2004
(73) Patentinhaber: HILTI Aktiengesellschaft, 9494 Schaan (LI)
(72) Erfinder: Gassmann, Horst-Detlef, 9491 Ruggell (LI); Wanger, Werner, 9493 Mauren (LI); Mergenbaum, Michael, 6800 Feldkirch (AT)
(74) Vertreter: Wildi, Roland

(56) Entgegenhaltungen:
- DE-A- 1 910 723
- DE-A- 4 432 783
- US-A- 5 569 010
- US-B1- 6 352 398

## Beschreibung

Die vorliegende Erfindung betrifft ein Befestigungselement der im Oberbegriff von Patentanspruch 1 genannten Art.

Derartige Befestigungselemente, wie z.B. Nägel, Bolzen und dgl. aus Stahl, werden in der Befestigungstechnik zum Befestigen von Gegenständen an harten Aufnahmewerkstoffen, wie Beton oder Gestein verwendet. Die Befestigungselemente weisen dazu je nach Anwendung einen Schaft mit einer sich in Setzrichtung verjüngenden Spitze und einen Lastangriffsteil, wie einen Gewindeabschnitt oder einen Kopf auf. Der Eintreibvorgang erfolgt beispielsweise mittels pulverkraft- oder gasbetriebener Setzgeräte. Bei der Durchführung von Setzungen derartiger Befestigungsmittel auf Beton kommt es häufig zu Abplatzungen und/oder zu Rissbildungen in dem umgebenden Beton. Diese Störungen führen dann dazu, dass schadhafte Setzungen wiederholt werden müssen und/oder dazu, dass Folgekosten entstehen, da die Abplatzungen und Risse im Falle von Sichtbeton nachbehandelt und kaschiert werden müssen.

Bei einem aus der DE 44 32 783 A1 bekannten Befestigungselement, von dem die vorliegende Erfindung ausgeht, ist an einem Nagel oder Bolzen ein Vorspannelement angeordnet, das zur Vergrösserung der Auflagefläche auf einem Untergrund von einem weiteren Element aus Kunststoff umgeben ist. Die Einleitung der Anpresskraft erfolgt bei dem Vorspannelement über einen Hülsenabschnitt in dem in der Ausgangsstellung des Befestigungselements die Spitze des Nagels, Bolzens oder etc. angeordnet ist.

Aus der DE OS 19 10 723 ist ein Befestigungselement wie ein Nagel oder Bolzen bekannt, bei dem auf dem Schaft eine metallische Scheibe angeordnet ist, der in Setzrichtung eine Scheibe aus einem elastischen Material vorgelagert ist. Der Durchmesser der Scheibe ist jedoch im Vergleich zum Schaftdurchmesser relativ gering, so dass ein Anpresseffekt beim Setzvorgang auch eher gering ist.

Von Nachteil bei den bekannten Befestigungselementen ist, dass zum einen, insbesondere bei unebenen Oberflächen, eine Rissbildung häufiger auftritt und zum anderen die Befestigungselemente durch ein sich Aufwölben des Untergrundes an der Setzstelle nicht bündig abschliessend gesetzt werden, so dass sich ein Spalt zwischen Auflagefläche und Untergrund bildet.

Die Aufgabe der vorliegenden Erfindung liegt darin, die oben genannten Nachteile zu vermeiden und ein Befestigungselement zur Verfügung zu stellen, mit dem eine niedrige Setzausfallrate erzielt werden kann.

Die Aufgabe wird durch ein Befestigungselement mit den im kennzeichnenden Teil von Anspruch 1 genannten Merkmalen erreicht, dem folgende besondere Bedeutung zukommt. Demnach genügt es, wenn an der Auflagefläche des Vorspannelements eine elastische bzw. kompressible Schicht angeordnet ist, die im Setzfall zwischen dem Untergrund und der Auflagefläche liegt. Symmetrisch in der Mitte der Schicht ist eine Öffnung angeordnet, deren Durchmesser grösser ist, als der Durchmesser des Schafts des Befestigungselements und idealerweise auch grösser als der Durchmesser des flanschartigen Auflageabschnitts des Vorspannelements. Im Setzfall wird über die elastische Schicht auch bei rauhen oder unebenen Oberflächen der Untergründe, in die die Setzung erfolgt, eine optimale Übertragung der Setzenergie auf die, den Setzpunkt umgebende Fläche erzielt, so dass kein Abplatzen erfolgt. Durch die radiale Beabstandung der elastischen Schicht von der Setzachse bzw. vom Schaft des Befestigungselements und die vorgesehene Öffnung, entsteht im gesetzten Zustand ein Freiraum, in den dem bei der Setzung eindringenden Befestigungselement ausweichendes Material des Untergrunds Platz nehmen kann. Ein Anheben des Befestigungselements bzw. eine Spaltbildung zum Untergrund wird durch diese Massnahme vermieden. In Tests konnte eine deutliche Verminderung der Setzausfallrate gegenüber Setzungen mit den aufgezeigten Befestigungselementen nach dem Stand der Technik festgestellt werden.

Ferner kann es günstig sein, wenn die Auflagefläche aus zwei Elementen gebildet wird, deren setzrichtungsseitige Endflächen in einer Ebene verlaufen. Diese beiden Elemente können aus einem flanschartigen Auflageabschnitt des Vorspannelements, an dem eine biegesteife Scheibe umfänglich angeordnet ist, gebildet werden. Die biegesteife Scheibe kann z. B. aus Metall gefertigt sein und zur Erhöhung der Steifigkeit z. B. mit einer umfänglich angeordneten Randwölbung und/oder mit Sicken auf der, der Setzrichtung abgewandten Fläche der Scheibe versehen sein. Die Scheibe kann aber auch auf der der Setzrichtung abgewandten Seite glockenförmig bzw. tellerrandförmig ausgebildet sein, um eine höhere Versteifung zu erreichen.
Durch die Zweiteiligkeit können die Herstellungskosten des Vorspannelements reduziert werden. Die Auflagefläche und das Vorspannelement können aber ebenso auch einteilig ausgeführt sein.

Weiterhin kann es von Vorteil sein, wenn in Setzrichtung vor dem Krafteinleitungsabschnitt der z. B. als Hülse ausgebildet ist, eine Metallscheibe angeordnet ist. Bei einem Setzvorgang wird diese Metallscheibe gegen die Hülse bzw. den Krafteinleitungsabschnitt des Vorspannelements bewegt, sodass die Hülse während eines Setzvorganges zusammengestaucht wird.

An der Metallscheibe kann randlich umlaufend eine in Setzrichtung geformte Wölbung vorgesehen sein. Durch diese Randwölbung oder Bördelung ist es möglich, dass während eines Setzvorganges die Hülse über die Metallscheibe aufgespleisst und zusammengerollt wird, so dass die Hülse beim Setzvorgang sehr stark zusammengestaucht bzw. gerollt werden kann, um eine möglichst grosse Setztiefe des Befestigungselements zu erreichen und das Kraft/Zeitverhalten des Befestigungselements positiv zu beeinflussen.

Von Vorteil kann es ferner noch sein, wenn an der in Setzrichtung liegenden Seite der Metallscheibe ein oder mehrere Schneideelemente angeordnet sind, durch die die Hülse bei einem Setzvorgang in mehrere Partien zerspleisst wird. Durch diese Massnahme kann das Zusammenrollen bzw. Zusammenstauchen der Hülse noch schneller und effektiver erfolgen, so dass die Setztiefe des Befestigungselements bei gleicher Ausgangsleistung des Setzgeräts noch einmal erhöht werden kann.

Weitere Vorteile und Massnahmen der Erfindung ergeben sich aus den Unteransprüchen, der nachfolgenden Beschreibung und den Zeichnungen. In den Zeichnungen ist die Erfindung in drei Ausführungsbeispielen dargestellt.

Es zeigen:
- Fig. 1: schematisch, eine erste Ausführungsform eines erfindungsgemässen Befestigungselements im Querschnitt,
- Fig. 2: schematisch, das Befestigungselement aus Fig. 1 in, in einen Untergrund gesetzten Zustand in perspektivischer Darstellung,
- Fig. 3: schematisch, das Befestigungselement aus Fig. 2 in, in einen Untergrund gesetzten Zustand, im Querschnitt,
- Fig. 4: schematisch, eine zweite Ausführungsform eines erfindungsgemässen Befestigungselements in, in einen Untergrund gesetzten Zustand, im Querschnitt,
- Fig. 5: schematisch, eine dritte Ausführungsform eines erfindungsgemässen Befestigungselements in, in einen Untergrund gesetzten Zustand in perspektivischer Darstellung.

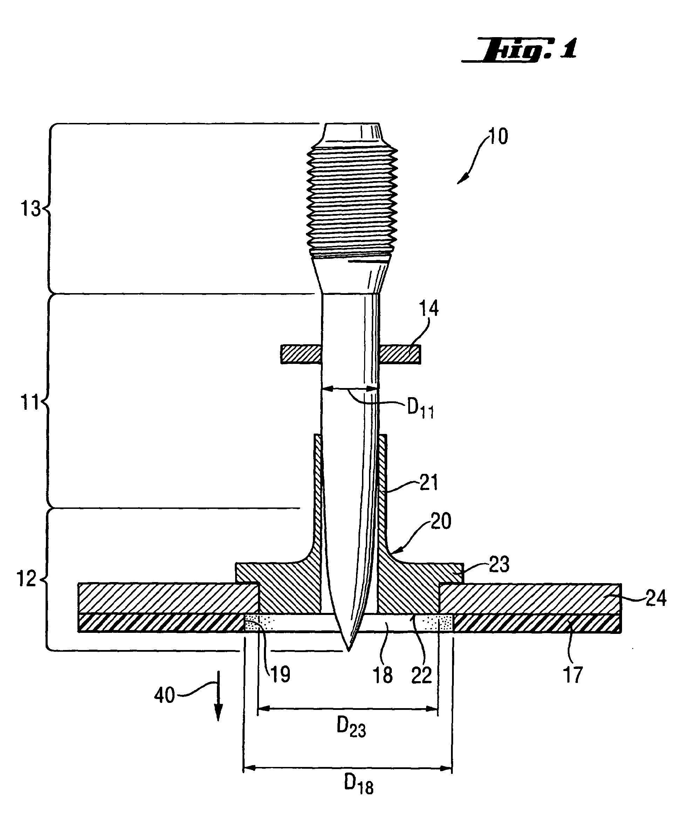

In den Fig.1 bis 3 ist ein erstes Ausführungsbeispiel eines erfindungsgemässen Befestigungselements 10 dargestellt. Das Befestigungselement 10 weist einen Lastangriffsteil 13 auf, der in dem vorliegenden Beispiel als Gewindeabschnitt ausgeführt ist. An diesen Lastangriffsteil 13, der im Übrigen auch als gewindeloser Nagelkopf ausgeführt sein kann, schliesst sich in Setzrichtung 40 ein Schaft 11 mit einem Aussendurchmesser D₁₁ an. An dem in Setzrichtung 40 liegenden Ende des Befestigungselements 10 ist eine Spitze 12 angeordnet.

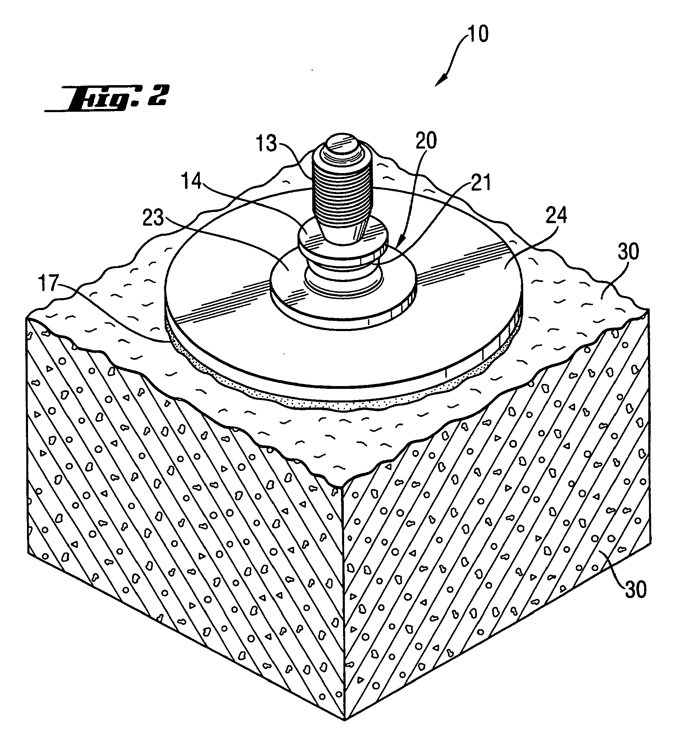

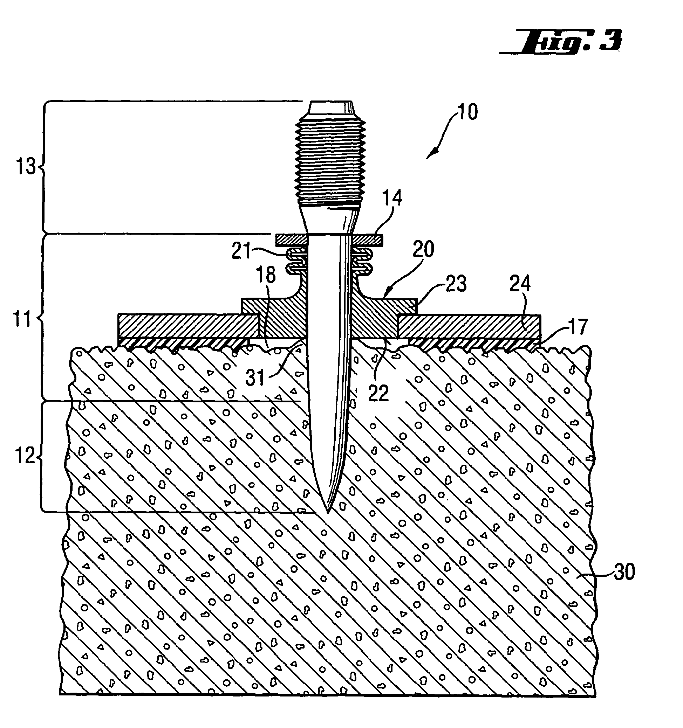

Auf den Schaft 11 ist in ungefähr mittiger Lage eine gelochte Metallscheibe 14, insbesondere eine Rondelle aufgesteckt oder aufgepresst. Auf die Spitze 12 und einen Teil des Schafts 11 ist ein Vorspannelement 20 aufgesetzt, welches einen Krafteinleitungsabschnitt 21, der als Hülsenabschnitt ausgeführt ist, ein flanschartiges Auflageteil 23 und eine Auflagescheibe 24 umfasst. In dem vorliegenden Ausführungsbeispiel sind der flanschartige Auflageteil 23 und die Auflagescheibe 24 als diskrete Bauteile ausgeführt die zu einem Teil zusammengefügt sind. Der flanschartige Auflageteil 23 und die Auflagescheibe 24 können aber ebenso gut auch einteilig ausgeführt werden. Die setzrichtungsseitigen Flächen des flanschartigen Auflageteils 23 und der Auflagescheibe 24 bilden den Auflageabschnitt 22 des Vorspannelements 20. An diesem Auflageabschnitt bzw. dieser Auflagefläche 22 kann das Befestigungselement 10 mit seinem Vorspannelement 20 an einen Untergrund 30 angesetzt werden. Dem Auflageabschnitt 22 in Setzrichtung 14 vorgelagert ist eine elastische Schicht 17 die eine, eine Aussenkante 19 bildende zentrale Öffnung 18 mit einem Durchmesser D₁₈ aufweist. Der Durchmesser D₁₈ der Öffnung 18 ist in dem vorliegenden Ausführungsbeispiel etwas grösser gewählt als der Durchmesser D₂₃ des flanschartigen Auflageteils 23 des Vorspannelements 20. Der Durchmesser D₁₈ ist ferner um ein mehrfaches grösser als der Durchmesser D₁₁ des Schafts 11 des Befestigungselements 10. Wird das erfindungsgemässe Befestigungselement mittels eines hier nicht dargestellten Setzgeräts in einen Untergrund eingetrieben (vergleiche Figuren 2 und 3) so erfährt der Untergrund 30 an der Setzstelle eine Aufwölbung 31 die innerhalb der Öffnung 18 der elastischen Schicht 17 Platz nehmen kann. Durch die elastische Schicht 17, bei der es sich z. B. um einen elastischen oder kompressiblen Kunststoff bzw. einen elastischen oder kompressiblen Schaum wie z. B. Neopren handelt, können beim Setzvorgang Unebenheiten im Untergrund 30 ausgeglichen werden, so dass die Krafteinleitung über das Vorspannelement 20 auf den Untergrund 30 gleichmässig erfolgen kann. Bei der Setzung wird der Krafteinleitungsabschnitt bzw. der Hülsenabschnitt 21 über die sich in Setzrichtung bewegende Metallscheibe 14, wie in Figur 3 dargestellt, zusammengestaucht bzw. zusammengefaltet. Die Metallscheibe 14 wird dabei ebenfalls um einen bestimmten Betrag entgegen der Setzrichtung 40 auf das Lastangriffsteil 13 des Befestigungselements 10 hin bewegt.

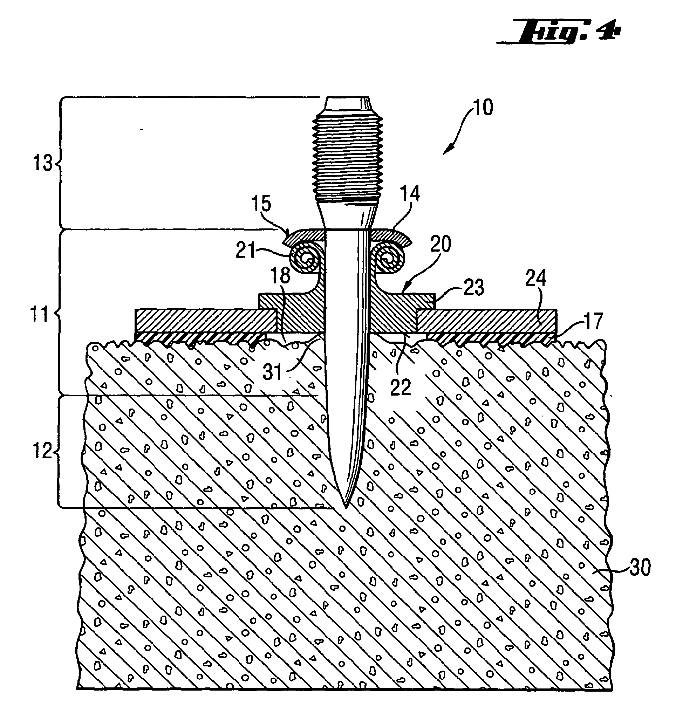

In Figur 4 ist ein zweites Ausführungsbeispiel eines Befestigungselements 10 dargestellt, welches sich lediglich dadurch von dem vorhergehend beschriebenen Befestigungselement 10 unterscheidet, dass die Metallscheibe 14 umfänglich eine Randeinwölbung 15 aufweist, die beim Setzvorgang ein Einrollen des Hülsenabschnitts 21, wie in Figur 4 dargestellt, unterstützt, so dass das Befestigungselement 10 noch etwas weiter in den Untergrund 30 eindringen kann.

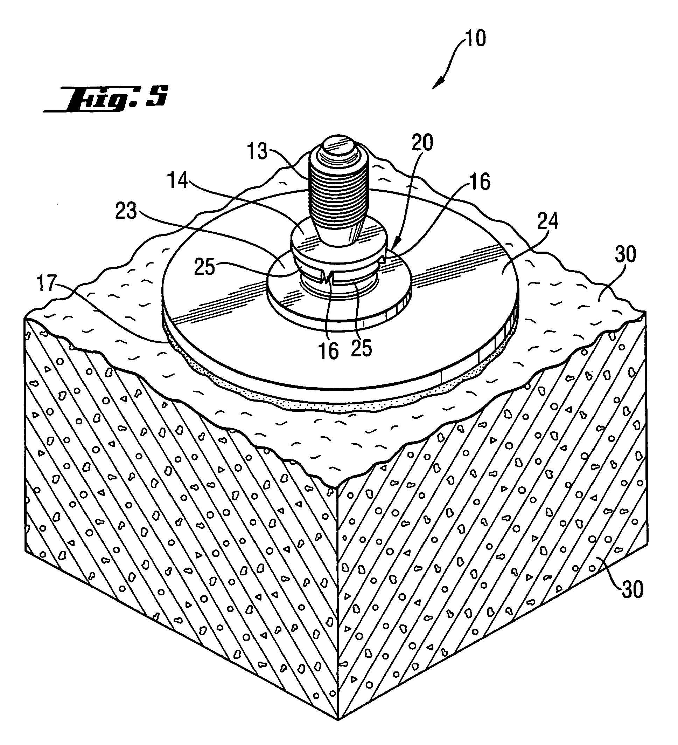

In der in Figur 5 dargestellten dritten Ausführungsform eines Befestigungselements 10 weist die Metallscheibe 14 an ihrer Unterseite Schneideelemente 16 bzw. Schneiden auf, über die während des Setzvorganges der Krafteinleitungsabschnitt bzw. der Hülsenabschnitt 21 des Vorspannelements 20 in zwei oder mehrere Segmente zerschnittenen bzw. zerspant wird. Hierdurch wird ein tieferes Eindringen des Befestigungselements in den Untergrund 30 erzielt.

Es versteht sich, dass die vorliegende Erfindung nicht auf die dargestellten Ausführungsbeispiele beschränkt ist. So können z. B. an der Auflagescheibe die Steifigkeit erhöhende Elemente, wie z. B. Sicken, eine Bördelung oder eine Falz angeordnet sein. Die Auflagescheibe könnte auch glockenförmig ausgebildet sein.

Als Materialien für die Auflagescheibe bzw. das Vorspannelement können sowohl Metalle verschiedener Festigkeit wie auch Kunststoffe, Kunststoffmetallkombinationen, faserverstärkte Kunststoffe etc. zum Einsatz kommen.

### Bezugszeichenliste

- 10: Befestigungselement
- 11: Schaft
- 12: Spitze / setzrichtungsseitiges Ende von 10
- 13: Lastangriffsteil
- 14: Metallscheibe
- 15: Randeinwölbung, umlaufend
- 16: Schneideelemente an 14
- 17: elastische Schicht
- 18: Öffnung in 17
- 19: Aussenkante von 18
- 20: Vorspannelement
- 21: Krafteinleitungsabschnitt / Hülsenabschnitt von 20
- 22: Auflageabschnitt / Auflagefläche von 20
- 23: flanschartiger Auflageteil von 20
- 24: Auflagescheibe
- 25: Segmente von 21

- 30: Untergrund
- 31: Aufwölbung von 30

- 40: Setzrichtung

- D₁₁: Durchmesser von 11
- D₁₈: Durchmesser von 18
- D₂₃: Durchmesser von 23

## Patentansprüche

1. Befestigungselement, wie ein Bolzen, Nagel oder dgl. zum Eintreiben in einen harten Untergrund wie Beton, insbesondere mit Hilfe eines, mit hochgespannten Gasen antreibbaren Setzgeräts, mit einem Schaft (11), einer Spitze (12) und einem Lastangriffsteil (13),
wobei an dem Befestigungselement ein Vorspannelement (20) angeordnet ist, mit einem Krafteinleitungsabschnitt (21), an dem der Schaft (11) und/oder die Spitze (12) des Befestigungselements (10) angreift und mit einer dem Lastangriffsteil (13) abgewandten Auflagefläche (22),
**dadurch gekennzeichnet,**
**dass** an der Auflagefläche (22) eine elastische Schicht (17) an dem Vorspannelement (20) angeordnet ist, die eine Öffnung (18) aufweist, deren Aussenkante (19) radial beabstandet ist von der axialen Projektion des Schafts (11) des Befestigungselements (10).

2. Befestigungselement, nach Anspruch 1, **dadurch gekennzeichnet, dass** die Auflagefläche (22) wenigstens von einem flanschartigen Auflageabschnitt (23) und einer Auflagescheibe (24) gebildet wird.

3. Befestigungselement, nach Anspruch 1 oder 2, **dadurch gekennzeichnet, dass** in Setzrichtung (40) vor dem Krafteinleitungsabschnitt (21) eine Metallscheibe (14), zur Stauchung des Krafteinleitungsabschnitts (21) während eines Setzvorgangs an dem Schaft (11) des Befestigungselements (10) angeordnet ist.

4. Befestigungselement, nach Anspruch 3, **dadurch gekennzeichnet, dass** an der Metallscheibe (14) randlich umlaufend eine in Setzrichtung gewölbte Randeinwölbung (15) angeordnet ist.

5. Befestigungselement, nach einem der Ansprüche 3 bis 4, **dadurch gekennzeichnet, dass** an der in Setzrichtung liegenden Seite der Metallscheibe (14) wenigstens ein Schneideelement (16) angeordnet ist.

## Claims

1. Attachment member, such as a bolt, nail or similar for driving into a hard base such as concrete, particularly with the help of a setting device, which can be driven by high pressure gas, with a shaft (1), a point (12) and a load handling part (13).
in which a pretensioning element (20) is arranged on the attachment member, with a power inserting section (21), on which the shaft (11) and/or the point (12) of the attachment member (10) acts, and with a supporting surface (22) facing away from the load handling part (13).
**characterised in that**
on the supporting surface (22) a flexible layer (17) is arranged on the pretensioning element (20), which has an opening (18), the outside edge of which (19) is radially at a distance from the axial projection of the shaft (11) of the attachment member (10).

2. Attachment member according to claim 1, **characterised in that** the supporting surface (22) is formed by at least one flange type supporting section (23) and a supporting disc (24).

3. Attachment member according to claim 1 or 2, **characterised in that** a metal disc (14) is arranged on the shaft (11) of the attachment member (10) in the setting direction (40) in front of the power inserting section (21) to compress the power inserting section (21) during a setting process.

4. Attachment member according to claim 3, **characterised in that** an arched edge (15) arched in the setting direction is arranged around the edge of the metal disc (14).

5. Attachment member according to one of claims 3 and 4, **characterised in that** at least one cutting element (16) is arranged on the side of the metal disc (14) lying in the setting direction.

## Revendications

1. Élément de fixation tel que goujon, clou ou analogue, à enfoncer dans un support dur tel que du béton, en particulier à l'aide d'un outil de scellement pouvant être entraîné par des gaz à haute pression, comprenant une tige (11), une pointe (12) et une partie d'application de charge (13), l'élément de fixation sur lequel est disposé un élément de précontrainte (20) comprenant une portion d'application de force (21), sur laquelle agit la tige (11) et/ou la pointe (12) de l'élément de fixation (10), et une surface d'appui (22) orientée à l'opposé de la partie d'application de charge (13), **caractérisé en ce que** sur l'élément de précontrainte (20) est disposée, au niveau de la surface d'appui (22), une couche élastique (17) qui comporte une ouverture (18) dont le bord extérieur (19) est distant axialement de la projection axiale de la tige (11) de l'élément de fixation (10).

2. Élément de fixation selon la revendication 1, **caractérisé en ce que** la surface d'appui (22) est formée d'au moins une portion d'appui en forme de collerette (23) et d'une rondelle d'appui (24).

3. Élément de fixation selon la revendication 1 ou 2, **caractérisé en ce qu'**une rondelle métallique (14) servant à écraser la portion d'application de force (21) lors d'une opération de scellement est disposée sur la tige (11) de l'élément de fixation (10), avant la portion d'application de force (21) par rapport à direction de scellement (40).

4. Élément de fixation selon la revendication 3, **caractérisé en ce qu'**un cintrage radial de bord (15) orienté dans la direction de scellement est réalisé sur la rondelle métallique (14) à la périphérie du bord de celle-ci.

5. Élément de fixation selon une des revendications 3 à 4, **caractérisé en ce qu'**au moins un élément de coupe (16) est disposé sur le côté de la rondelle métallique (14) orienté dans la direction de scellement.
